# EUROPEAN PATENT APPLICATION

(11) **EP 2 701 045 A1**
(43) Date of publication of application: **26.02.2014**
(21) Application number: 12774703.8
(22) Date of filing: 20.04.2012
(51) Int. Cl.: G06F 3/048, G06F 3/041

(54) **ELECTRONIC APPARATUS, CONTROL METHOD FOR ELECTRONIC APPARATUS, AND PROGRAM**

(30) Priority: 22.04.2011 JP 2011096161
(71) Applicant: NEC CASIO Mobile Communications, Ltd., Kawasaki-shi Kanagawa 211-8666 (JP)
(72) Inventor: MORI, Kenichi, Kawasaki-shi, Kanagawa 211-8666 (JP)
(74) Representative: Vossius & Partner
(86) International application number: PCT/JP2012/060756
(87) International publication number: WO 2012/144616

(57) **Abstract**

An electronic apparatus includes: a touch panel that, when touch operations are carried out in which one or a plurality of indicating means come into contact with or proximity to the touch panel, supplies touch information that indicates the positions of contact points at which the one or plurality of indicating means come into contact with or proximity to the touch panel; a storage unit that stores, as authentication data, the number of the contact points in the touch operations that is indicated by the touch information; and an authentication unit that, upon receiving the touch information after a request for user authentication, carries out user authentication based on a comparison of the number of the contact points that is indicated by the touch information and the authentication data stored in the storage unit.

## Description

### BACKGROUND OF INVENTION

### THECHNICAL FIELD

The present invention relates to an electronic apparatus equipped with a touch panel, a control method of the electronic apparatus, and a program.

### Background Art

Electronic apparatuses such as portable telephones, smartphones, and PDAs (Personal Digital Assistants) are sometimes equipped with a locking function that validates or invalidates operation input according to the result of user authentication. An electronic apparatus that is equipped with a locking function invalidates the operation input of a party other than a user who has received authentication, and as a result, even in the event of loss of the electronic apparatus, illicit use by a third party that has acquired the electronic apparatus or the divulging of information stored in the electronic apparatus can be prevented and an improvement in security achieved.

Methods of implementing user authentication are varied and include methods that employ passwords and methods that employ a user's fingerprint as the authentication data for user authentication. In an electronic apparatus that is equipped with a touch panel that detects the contact or proximity of an indicating means such as a finger, there are also methods that use information that is entered as input by way of the touch panel as authentication data.

For example, Patent Document 1 (JP 2007-257140A) discloses a method in which a predetermined pattern shape is stored as authentication data in an electronic apparatus that is equipped with a touch panel and, at the time of user authentication, user authentication is carried out on the basis of a comparison of the pattern shape that is entered by the user's handwriting on the touch panel and the pattern shape that is stored.

Alternatively, Patent Document 2 (JP 2005-128704A) discloses a method in which, in an electronic apparatus that is equipped with a touch panel, the order in which an indicating means comes into contact with or proximity to a plurality of areas on the touch panel is stored as authentication data, and at the time of user authentication, user authentication is carried out on the basis of comparison of the order in which the user places indicating means in contact with a plurality of areas and of the order that is stored.

### RELATED ART LITERATURE

### Patent documents:

Patent Document 1: JP 2007-257140A
Patent Document 2: JP 2005-128704A

### DISCLOSURE OF INVENTION

In the method disclosed in Patent Document 1, when a pattern shape is input using a finger, a mark (a trace of sebum from the finger) that accords with the pattern shape is left on the touch panel, and the authentication data can therefore be learned by a third party based on this mark.

In the method disclosed in Patent Document 2, the authentication data can be divulged to a third party based on the user's movements when placing the indicating means in contact with or proximity to a plurality of areas on the touch panel.

It is an object of the present invention to provide an electronic apparatus, a control method of the electronic apparatus, and a program that can reduce the possibility that authentication data will be divulged to a third party.

### DISCLOSURE OF INVENTION

To achieve the above object of the present invention, an electronic apparatus according to the present invention includes:
a touch panel that, when a touch operation is carried out in which one or a plurality of indicating means come into contact with or proximity to the touch panel, supplies touch information that indicates the positions of contact points at which the one or plurality of indicating means come into contact with or proximity to the touch panel;
a storage unit that stores, as authentication data, the number of the contact points in the touch operation that is indicated in the touch information; and
an authentication unit that, upon receiving the touch information after a request for user authentication, carries out user authentication based on a comparison of the number of the contact points that is indicated in the touch information and authentication data that are stored in the storage unit.

To achieve the above object of the present invention, a control method of an electronic apparatus according to the present invention includes steps of:
when a touch operation is carried out in which one or a plurality of indicating means come into contact with or proximity to a touch panel that is equipped in the electronic apparatus and that supplies as output touch information that indicates the positions of contact points at which the one or plurality of indicating means come into contact with or proximity to the touch panel, storing, as authentication data, the number of the contact points in the touch operation that is indicated in the touch information that is supplied from the touch panel; and
upon receiving the touch information after a request for user authentication, carrying out user authentication based on a comparison of the number of the contact points that is indicated in the touch information and the authentication data that is stored.

To achieve the above object of the present invention, a program according to the present invention causes an electronic apparatus to execute processes of:
when a touch operation is carried out in which one or a plurality of indicating means come into contact with or proximity to a touch panel that is equipped in the electronic apparatus and that supplies as output touch information that indicates the positions of contact points at which the one or plurality of indicating means come into contact with or proximity to the touch panel, storing as authentication data the number of the contact points in the touch operation that is indicated in the touch information that is supplied from the touch panel; and
upon receiving the touch information after a request for user authentication, carrying out user authentication based on a comparison of the number of the contact points that is indicated in the touch information and the authentication data that is stored.

The present invention enables reducing the possibility that authentication data will be divulged to a third party.

### BRIEEF DESCRIPTION OF DRAWINGS

FIG. 1 is a block diagram showing the configuration of the electronic apparatus of the first exemplary embodiment of the present invention.
FIG. 2 is a flow chart showing operation at the time of setting authentication data of the electronic apparatus shown in FIG. 1.
FIG. 3 shows an example in which the display unit shown in FIG. 1 is displayed.
FIG. 4 shows an example of a touch operation that is performed on the touchpad shown in FIG. 1.
FIG. 5 shows another example of a touch operation that is performed on the touchpad shown in FIG. 1.
FIG. 6 shows yet another example of a touch operation that is performed on the touchpad shown in FIG. 1.
FIG. 7 is a flow chart showing the operation at the time of user authentication in the electronic apparatus shown in FIG. 1.
FIG. 8 shows yet another example of a touch operation that is performed on the touchpad shown in FIG. 1.
FIG. 9 is a block diagram showing the configuration of the electronic apparatus of the second exemplary embodiment of the present invention.

### EXEMPLARY EMBODIMENT

Exemplary embodiments of the present invention are next described with reference to the accompanying drawings.

### First Exemplary Embodiment

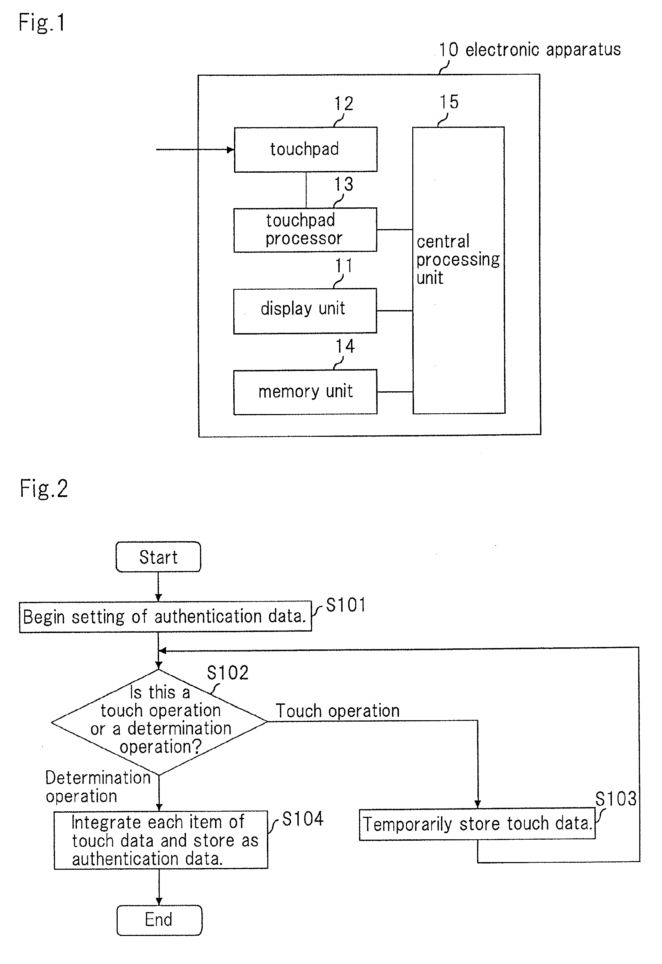

FIG. 1 is a block diagram showing the configuration of electronic apparatus 10 of the first exemplary embodiment of the present invention. FIG. 1 shows only those constructions of the configuration of electronic apparatus 10 that relate to the present invention and omits description of other constructions.

Electronic apparatus 10 shown in FIG. 1 includes: display unit 11, touchpad 12, touchpad processor 13, memory unit 14, and central processing unit 15. Memory unit 14 is one example of the storage unit, and central processing unit 15 is an example of the authentication unit.

Display unit 11 is a display device such as an LCD (Liquid Crystal Display) or an organic EL (Electroluminescence) display and displays various pictures on a display screen such as the a button indicating a request for settings of authentication data, a button indicating a request for user authentication, or pictures for user authentication.

Touchpad 12 is arranged to overlay the display screen of display unit 11, and upon detecting contact with or proximity to indicating means such as a finger or stylus, supplies touchpad processor 13 with a detection signal according to the positions of the contact points with which the indicating means come into contact or proximity. Methods of detecting the contact or proximity of the indicating means include a variety of types such as a resistive touch panel, a capacitive touch panel, and an optical sensor type.

Touchpad processor 13 applies a drive signal to touchpad 12. Touchpad processor 13 further, after subjecting the detection signal supplied from touchpad 12 to a predetermined process such as elimination of unstable data, calculates the positions of contact points at which the indicating means come into contact or proximity based on the detection signal and then supplies touch information, that indicates the positions of contact points that were calculated, to central processing unit 15.

Memory unit 14 stores data and programs that are necessary for various processing operations such as authentication data for user authentication that are carried out by central processing unit 15.

Central processing unit 15 validates or invalidates operation input by way of touchpad 12 according to the result of user authentication. In addition, upon validating the operation input by way of touchpad 12, central processing unit 15 displays on display unit 11 the progress of the operation according to the operation that is entered and provides visual feedback to the user. Central processing unit 15 is constituted by, for example, a CPU (central processing unit) that executes incorporated programs or programs that are read from memory unit 14 and is further equipped with functions for controlling the overall operation of electronic apparatus 10.

Operation of electronic apparatus 10 of the present exemplary embodiment will be next described.

The operation at the time of setting authentication data will be first described with reference to the flow chart shown in FIG. 2.

When an indicating means comes into contact with or proximity to touchpad 12 that is arranged on a button displayed on display unit 11 indicating a request for setting authentication data and when a request for setting authentication data is received from touchpad 12, central processing unit 15 displays on display unit 11 a picture for user authentication and begins the setting of authentication data (Step S101). The request for setting authentication data may also be entered by way of a physical key button provided on electronic apparatus 10.

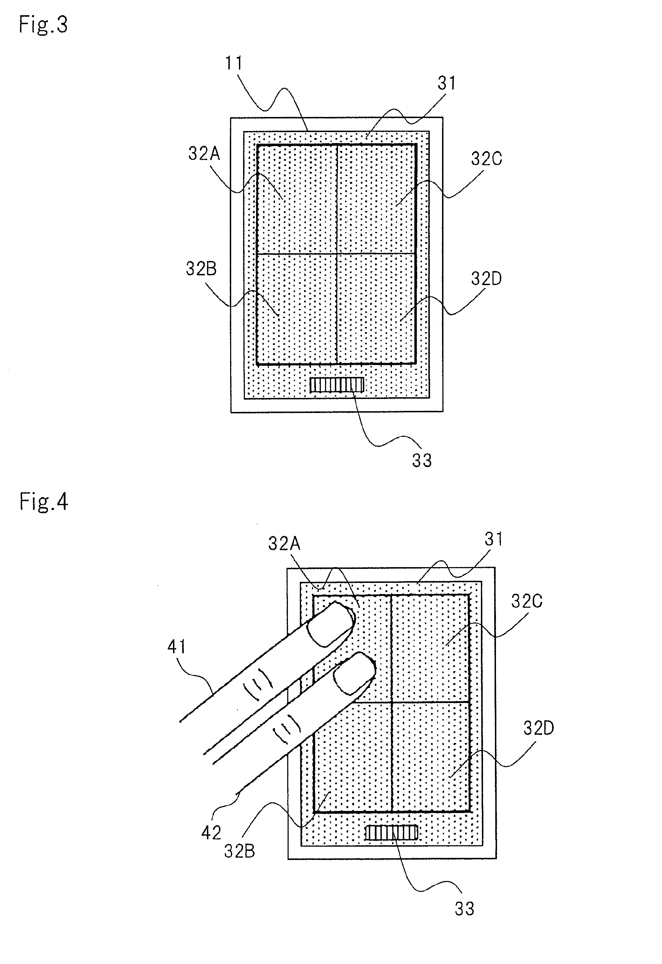

FIG. 3 shows the display state of the picture for user authentication.

As shown in FIG. 3, as the picture for user authentication on display unit 11, four rectangular areas 32A-32D and determination button 33 are displayed in detectable area 31 in which touchpad 12 is able to detect the contact or proximity of indicating means. When a physical button is provided on electronic apparatus 10, determination button 33 need not be displayed on the display screen.

Again referring to FIG. 2, after providing for the display of the picture for user authentication on display unit 11, central processing unit 15 instructs touchpad processor 13 to place touchpad 12 in the input standby state (Step S 102).

In the input standby state, if a touch operation is carried out in which one or a plurality of indicating means come into contact with or proximity to one or a plurality of the areas of areas 32A-32D and then simply removed, a detection signal that accords with the positions of the contact points with which this one or a plurality of indicating means come into contact or proximity, is supplied as output from touchpad 12. Touchpad processor 13, after subjecting this detection signal to predetermined processing, calculates the positions of the contact points and supplies touch information that indicates the calculated positions to central processing unit 15.

Central processing unit 15 receives the touch information that was supplied from touchpad processor 13, identifies the areas among areas 32A-32D indicated in the received touch information that contain the positions that are indicated by the touch information, i.e., the areas in which the contact or proximity of indicating means is detected (hereinbelow referred to as "detected areas") and the number of contact points in these detected areas, temporarily stores in memory unit 14 touch data that indicate the identified detected areas and the number of contact points in the detected areas (Step S103), and then returns to Step S102.

In the input standby state, central processing unit 15 repeats the processes of Steps S102 and S103 until a determination operation is carried out in which indicating means come into contact with or proximity to touchpad 12 that is arranged in the area in which determination button 33 is displayed.

When a determination operation is carried out, central processing unit 15 integrates, in the order in which each touch operation is carried out, the touch data that is temporarily stored in memory unit 14 according to the touch operations to that point and stores the result as authentication data in memory unit 14 (Step S104).

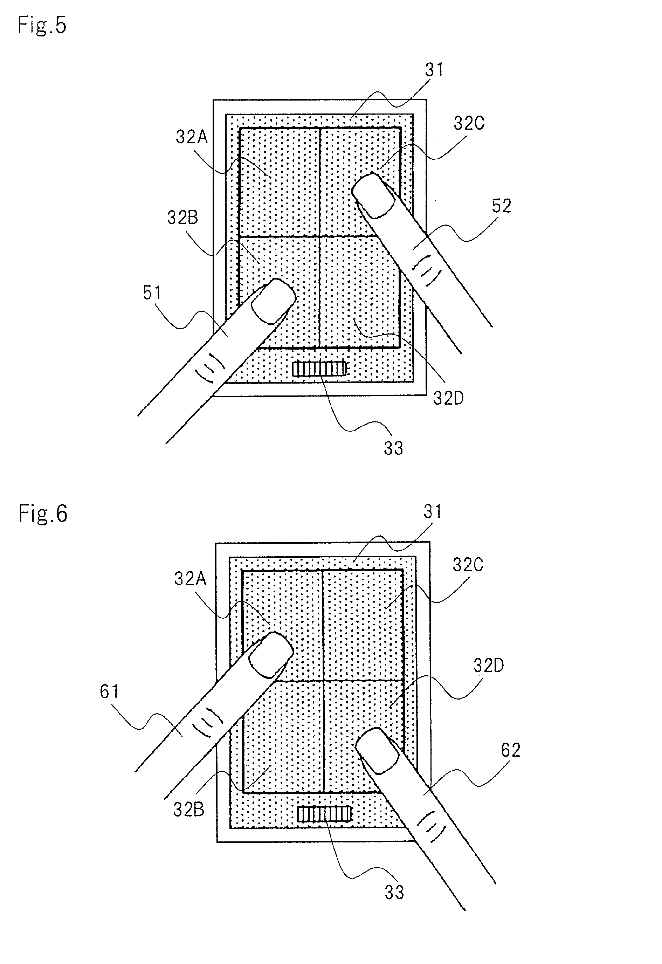

A case is here considered in which, before the determination operation is carried out: touch operation 1 is carried out in which indicating means 41 and 42 come into contact with or proximity to area 32A at substantially the same time as shown in FIG. 4; following touch operation 1, touch operation 2 is carried out in which indicating means 51 comes into contact with or proximity to area 32B and indicating means 52 comes into contact with or proximity to area 32C at substantially the same time as shown in FIG. 5; and following touch operation 2, touch operation 3 is carried out in which indicating means 61 comes into contact with or proximity to area 32A and indicating means 62 comes into contact with or proximity with area 32D at substantially the same time as shown in FIG. 6. In this case, central processing unit 15 stores in memory unit 14 authentication data that indicate that the transition order of detected areas and the transition order of the number of contact points in these detected areas of each operation from touch operation 1 to touch operation 3 are: "two contact points in area 32A"; "one contact point in area 32B, and moreover, one contact point in area 32C"; and "one contact point in area 32A, and moreover, one contact point in area 32D."

In a touch operation for setting the authentication data, the indicating means are preferably placed in contact with or proximity to areas that differ from those of the immediately preceding touch operation. In addition, the number of touch operations for setting authentication data is not limited to three and may be one, two, four, or more. The greater the number of touch operations, the more difficulty a third party will encounter in learning the authentication data.

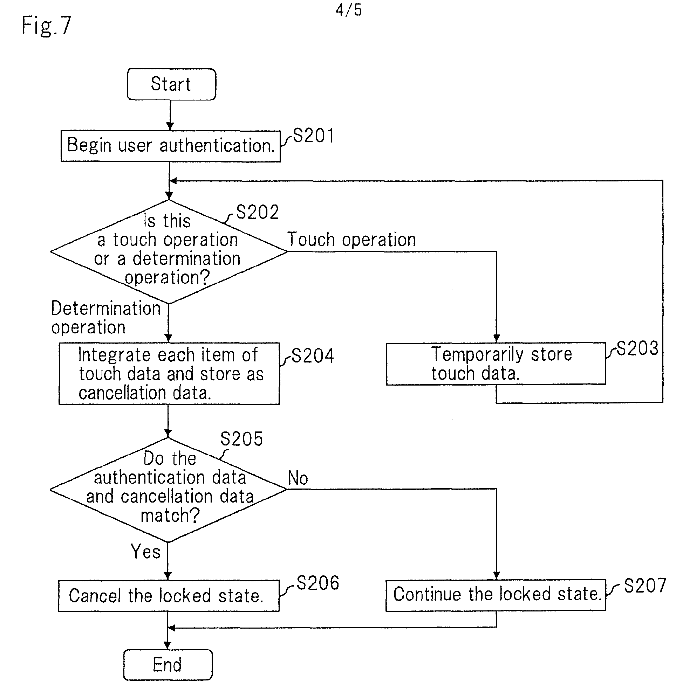

The operation at the time of user authentication will be next described with reference to the flow chart shown in FIG. 7.

An example of user authentication will be next described from a state in which operation input is locked until the locking operation is released.

Upon receiving a request for user authentication from touchpad 12 that is carried out by placing indicating means come into contact with or proximity to touchpad 12 that is arranged on the button that is displayed on display unit 11 and that indicates a request for user authentication, central processing unit 15 displays on display unit 11 the picture for user authentication shown in FIG. 3 (Step S201). The request for user authentication may also be applied as input by way of a physical key button that is provided on electronic apparatus 10.

After the picture for user authentication is displayed on display unit 11, central processing unit 15 instructs touchpad processor 13 to place touchpad 12 in the input standby state (Step S202).

When a touch operation is carried out in the input standby state, a detection signal that accords with the positions of the contact points at which indicating means come into contact or proximity due to the touch operation is supplied as output from touchpad 12. After subjecting the detection signal to a predetermined process, touchpad processor 13 calculates the positions of the contact points and supplies touch information that indicates the calculated positions to central processing unit 15.

Central processing unit 15 receives the touch information that was supplied from touchpad processor 13, temporarily stores in memory unit 14 the touch data that indicate the detected areas and the number of contact points in the detected areas that are indicated in the received touch information (Step S203), and returns to the process of Step S202.

Central processing unit 15 repeats the processes of Steps S202 and 203 until the determination operation is carried out in the input standby state.

When the determination operation has been carried out, central processing unit 15 integrates, in the order of input of the touch operations, the touch data that were temporarily stored in memory unit 14 in accordance with the touch operations to that point and stores the result as cancellation data in memory unit 14 (Step S204).

A case is here described in which, before the determination operation: touch operation 4 is carried out in which indicating means 41 and 42 come into contact with or proximity to area 32A at substantially the same time as shown in FIG. 4; following touch operation 4, touch operation 5 is carried out in which indicating means 51 comes into contact with or proximity to area 32B and indicating means 52 comes into contact with or proximity to area 32C at substantially the same time as shown in FIG. 5; and following touch operation 5, touch operation 6 is carried out in which indicating means 61 comes into contact with or proximity to area 32A and indicating means 62 comes into contact with or proximity with area 32D at substantially the same time as shown in FIG. 6. In this case, central processing unit 15 stores cancellation data in memory unit 14 that indicate that the transition order of the detected areas and the transition order of the number of contact points in these detected areas from touch operation 4 up to touch operation 6 are: "two contact points in area 32A"; "one contact point in area 32B, and moreover, one contact point in area 32C"; and "one contact point in area 32A, and moreover, one contact point in area 32D."

Again referring to FIG. 7, central processing unit 15 judges whether or not the authentication data stored in memory unit 14 and the cancellation data match (Step S205).

If the authentication data and cancellation data match (YES in Step S205), central processing unit 15 judges that user authentication has succeeded and cancels locking (Step S206).

If the authentication data and the cancellation data do not match (NO in Step S205), central processing unit 15 judges that user authentication has failed and continues locking (Step S207).

Thus, according to the present exemplary embodiment, electronic apparatus 10 stores, as authentication data, the transition order of the detected areas and the transition order of the number of contact points in the detected areas in a plurality of touch operations that are indicated in touch information, and upon receiving touch information at the time of user authentication, carries out user authentication based on whether or not cancellation data, that indicate the transition order of detected areas and the transition order of the number of contact points in the detected areas in a plurality of touch operations that are indicated in the touch information, match the authentication data that were stored.

Taking the transition order of the number of contact points as the authentication data can reduce the possibility that the authentication data will be learned by a third party because the number of contact points is typically difficult to estimate based on a user's movements at the time of the touch operations.

Although a case has been described in the present exemplary embodiment in which the transition order of the detected areas and the transition order of the number of contact points in the detected areas are taken as the authentication data, the present invention is not limited to this form, and only the transition order of the number of contact points may be taken as the authentication data without dividing the area on touchpad 12.

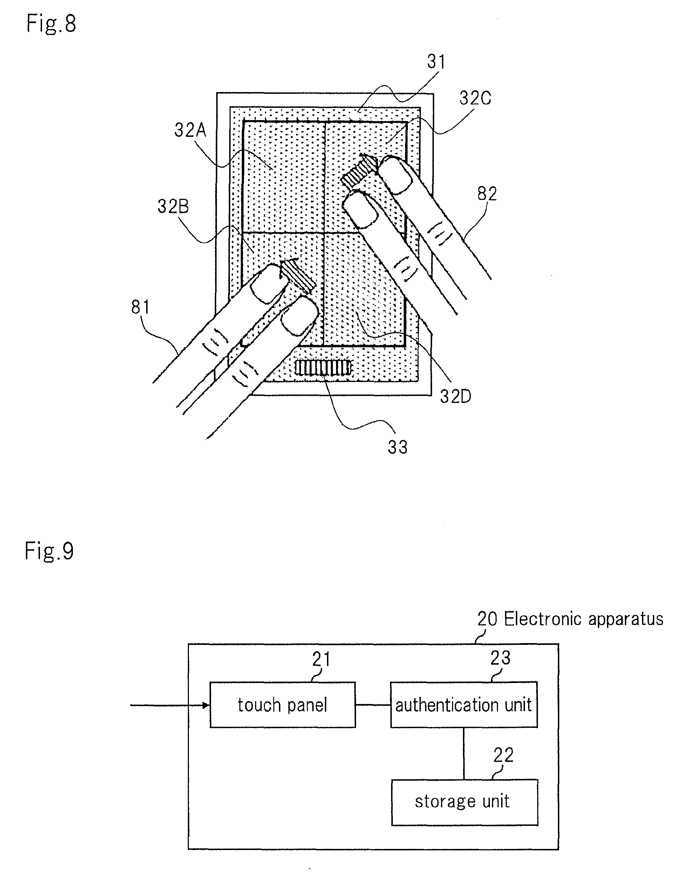

Still further, although a case has been described in the present exemplary embodiment in which, as the touch operation, the indicating means comes into contact with or proximity to touchpad 12 and then simply were removed, i.e., tap operation were carried out, the present invention is not limited to this form, and, as shown in FIG. 8, a slide operation may also be carried out in which indicating means 81 and 82 come into contact with or proximity to touchpad 12 and the contact points are then caused to slide.

When a slide operation is carried out, touchpad 12 supplies positional information that indicates the sliding state of the contact points. Central processing unit 15 identifies the sliding state of the contact points based on this positional information, stores in memory unit 14, as authentication data and cancellation data, transition order of the detected areas, the number of contact points in these detected areas, and the sliding state of these contact points, and carries out user authentication.

Although FIG. 8 shows an example in which contact points are caused to slide within the same areas in accordance with slide operation, the present invention is not limited to this form, and contact points may be caused to slide across a plurality of areas.

In addition, the number of areas on touchpad 12 is not limited to four and may be any number. Still further, the shape of each area is not limited to a rectangle and may be any shape, and further, the shapes of each of the areas may differ.

In addition, information such as numbers, characters, or symbols that identify a plurality of areas on touchpad 12 may be displayed on display unit 11. Displaying information that identifies each area facilitates the storage of authentication data. Further, dividing the detection area of touchpad 12 into four columns and three rows, i.e., twelve areas and assigning the numbers from 0-9 and the symbols * and # to respective areas similar to the key arrangement of a portable telephone allows the configuration, that is used for applying, for example, a telephone number as input, to be additionally used for the setting of authentication data, and thus enables the achievement of commonality of processes and a reduction of the volume of a program.

Further, in a touch operation, placing the indicating means into contact with or proximity to touchpad 12 is not limited to two points and can be one, three, or more points. However, in order that a third party will not easily learn the authentication data, it is preferable that, at the time of setting authentication data, a plurality of indicating means come into contact with or proximity to touchpad 12 at two or more points at substantially the same time at least one time.

### Second Exemplary Embodiment

FIG. 9 is a block diagram showing the configuration of the electronic apparatus of the second exemplary embodiment of the present invention.

Electronic apparatus 20 shown in FIG. 9 includes: touch panel 21, storage unit 22, and authentication unit 23.

Touch panel 21 is provided with a display screen and displays various pictures. In addition, touchpad 12 shown in FIG. 1 is arranged to overlie the display screen, and when a touch operation is carried out in which one or a plurality of indicating means come into contact with or proximity to touch panel 21, touch panel 21 supplies touch information that indicates the positions of the contact points of the indicating means to authentication unit 23.

Storage unit 22 stores as authentication data the number of contact points in a touch operation that is indicated in touch information.

Authentication unit 23, upon receiving touch information after a request for user authentication from touch panel 21, carries out user authentication based on the comparison of the number of contact points indicated in the touch information and the authentication data that are stored in storage unit 22. A request for user authentication may be applied as input by way of, for example, a physical key button that is provided on electronic apparatus 20.

Taking the number of contact points as authentication data can deduce the possibility that the authentication data will be learned by a third party because the number of contact points is typically difficult to estimate based on a user's movements at the time of the touch operations.

The method carried out in the electronic apparatus of the present invention may be applied to a program that is to be executed by a computer. This program may be stored on a recording medium and can also be provided to the outside by way of a network.

The invention of the present application has been described with reference to the exemplary embodiments. The invention of the present application, however, is not limited to the above-described exemplary embodiments. Various changes and modifications that those skilled in the art can understand can be made in the configuration and details of the invention of the present application within the scope of the invention of the present application.

This application claims the benefits of priority based on Japanese Patent Application No. 2011-096161 for which application was submitted on April 22, 2011 and incorporates by citation all of the disclosures of that application.

## Claims

1. An electronic apparatus comprising:
a touch panel that, when a touch operation is carried out in which one or a plurality of indicating means come into contact with or proximity to said touch panel, supplies touch information that indicates the positions of contact points at which said one or plurality of indicating means come into contact with or proximity to the touch panel;
a storage unit that stores, as authentication data, the number of said contact points in said touch operation that is indicated in said touch information; and
an authentication unit that, upon receiving said touch information after a request for user authentication, carries out user authentication based on a comparison of the number of said contact points that is indicated in the touch information and authentication data that are stored in said storage unit.

2. The electronic apparatus according to claim 1, wherein:
said storage unit stores, as said authentication data, the transition order of the number of said contact points in each of said plurality of touch operations that is indicated in touch information that is supplied in said plurality of said touch operations; and
said authentication unit, upon receiving said touch information after a request for said user authentication, carries out user authentication based on a comparison of the transition order of the number of contact points that is indicated in the touch information and said authentication data.

3. The electronic apparatus according to claim 2, wherein:
said storage unit stores, as said authentication data, the transition order of one or a plurality of detected areas in which contact or proximity of said indicating means is detected among a plurality of areas provided on said touch panel and the transition order of the number of said contact points in said detected areas in each of said plurality of touch operations that are indicated in touch information that is supplied in a plurality of said touch operations; and
said authentication unit, upon receiving said touch information after a request for said user authentication, carries out user authentication based on a comparison of the transition order of said detected areas and the transition order of the number of said contact points in said detected areas that are indicated in the touch information and authentication data that are stored in said storage unit.

4. The electronic apparatus according to claim 3, wherein:
said touch panel, when a slide operation is carried out in which said contact points are caused to slide, supplies touch information that further indicates the sliding state of said contact points;
said storage unit stores, as said authentication data, the sliding state of said contact points in addition to the transition order of said detected areas and the transition order of the number of said contact points in said detected areas in each of a plurality of touch operations that are indicated in touch information that is supplied in a plurality of said touch operations; and
said authentication unit, upon receiving said touch information after a request for said user authentication, carries out user authentication based on a comparison of said detected areas, the number of contact points in said detected areas, and the sliding state of said contact points that are indicated in said touch information and authentication data that are stored in said storage unit.

5. The electronic apparatus according to any one of claims 1 to 4, wherein said touch panel displays on a display screen a picture for distinguishing each of said plurality of areas.

6. A control method of an electronic apparatus comprising steps of:
when a touch operation is carried out in which one or a plurality of indicating means come into contact with or proximity to a touch panel that is equipped in said electronic apparatus and that supplies as output touch information that indicates the positions of contact points at which said one or plurality of indicating means come into contact with or proximity to said touch panel, storing, as authentication data, the number of said contact points in said touch operation that is indicated in said touch information that is supplied from said touch panel; and
upon receiving said touch information after a request for user authentication, carrying out user authentication based on a comparison of the number of contact points that is indicated in the touch information and said authentication data that is stored.

7. The control method of an electronic apparatus according to claim 6, further comprising:
storing, as said authentication data, the transition order of the number of said contact points in each of said plurality of touch operations that is indicated in touch information that is supplied in the plurality of said touch operations; and
upon receiving said touch information after a request for said user authentication, carrying out user authentication based on a comparison of the transition order of the number of said contact points that is indicated in the touch information and said authentication data that are stored.

8. The control method of an electronic apparatus according to claim 7, further comprising:
storing, as said authentication data, the transition order of one or a plurality of detected areas in which the contact or proximity of said indicating means is detected among a plurality of areas that are provided on said touch panel and the transition order of the number of said contact points in said detected areas in each of said plurality of touch operations that are indicated by touch information that is supplied in each of said plurality of touch operations; and
upon receiving said touch information after a request for said user authentication, carrying out user authentication based on a comparison of the transition order of said detected areas and the transition order of the number of said contact points in said detected areas that are indicated in said touch information.

9. The control method of an electronic apparatus according to claim 8, wherein:
when a slide operation is carried out in which said contact points are caused to slide, touch information further indicating the sliding state of said contact points is supplied from said touch panel;
in addition to the transition order of said detected areas and the transition order of the number of said contact points in said detected areas, the sliding state of said contact points in each of said plurality of touch operations that is indicated in touch information that is supplied in the plurality of said touch operations is stored as said authentication data; and
upon receiving said touch information after a request for said user authentication, user authentication is carried out based on a comparison of the transition order of said detected areas, the transition order of the number of contact points in said detected areas, and the sliding state of said contact points that are indicated in the touch information and said authentication data that are stored.

10. A program that causes an electronic apparatus to execute processes of:
when a touch operation is carried out in which one or a plurality of indicating means come into contact with or proximity with a touch panel that is equipped in said electronic apparatus and that supplies as output touch information that indicates the positions of contact points at which said one or plurality of indicating means come into contact with or proximity to said touch panel, storing as authentication data the number of said contact points in said touch operation that is indicated in said touch information that is supplied from said touch panel; and
upon receiving said touch information after a request for user authentication, carrying out user authentication based on a comparison of the number of said contact points that is indicated in the touch information and said authentication data that is stored.
